# DEMANDE DE BREVET EUROPEEN

(11) **EP 1 071 299 A1**
(43) Date de publication de la demande: **24.01.2001**
(21) Numéro de dépôt: 00402049.1
(22) Date de dépôt: 19.07.2000
(51) Int. Cl.: H04Q 7/34, H04L 1/24, H04B 7/00

(54) **Système pour contrôler l'état d'une liaison entre une station maître et une station esclave**

(30) Priorité: 21.07.1999 FR 9909466
(71) Demandeur: Alstom, 75116 Paris (FR)
(72) Inventeur: Thibault, Xavier, 92160 Antony (FR)

(57) **Abrégé**

Ce système d'échange d'informations entre une station maître et différentes stations esclaves raccordées par un réseau de transmission d'informations par voie radioélectrique, est caractérisé en ce que la station maître (1) émet périodiquement et successivement vers chaque station esclave (2,3,4), une requête de contrôle d'état et en ce que la station esclave (2,3,4) émet un signal d'accusé de réception en réponse à cette requête de contrôle, pour permettre à la station maître (1) de contrôler l'état de la liaison entre la station maître et la station esclave et de cette station esclave.

## Description

La présente invention concerne un système d'échange d'informations entre une station maître et différentes stations esclaves raccordées par un réseau de transmission d'informations par voie radioélectrique.

De tels systèmes d'échange d'informations ont déjà été développés pour permettre l'échange de données par exemple entre des trains et des postes fixes d'infrastructure ferroviaire par l'intermédiaire de réseaux téléphoniques.

On conçoit cependant que ces systèmes présentent un certain nombre d'inconvénients car il peut arriver pour une raison ou pour une autre, que la liaison entre une station esclave et la station maître soit défectueuse ou interrompue, ou encore que cette station esclave soit elle-même en dérangement, sans que la station maître ne s'en aperçoive.

Le but de l'invention est donc de résoudre ces problèmes.

A cet effet, l'invention a pour objet un système d'échange d'informations entre une station maître et différentes stations esclaves raccordées par un réseau de transmission d'informations par voie radioélectrique, caractérisé en ce que la station maître émet périodiquement et successivement vers chaque station esclave, une requête de contrôle d'état et en ce que la station esclave émet un signal d'accusé de réception en réponse à cette requête de contrôle, pour permettre à la station maître de contrôler l'état de la liaison entre la station maître et la station esclave et de cette station esclave.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'échange d'informations selon l'invention; et
- la Fig.2 illustre le fonctionnement de celui-ci.

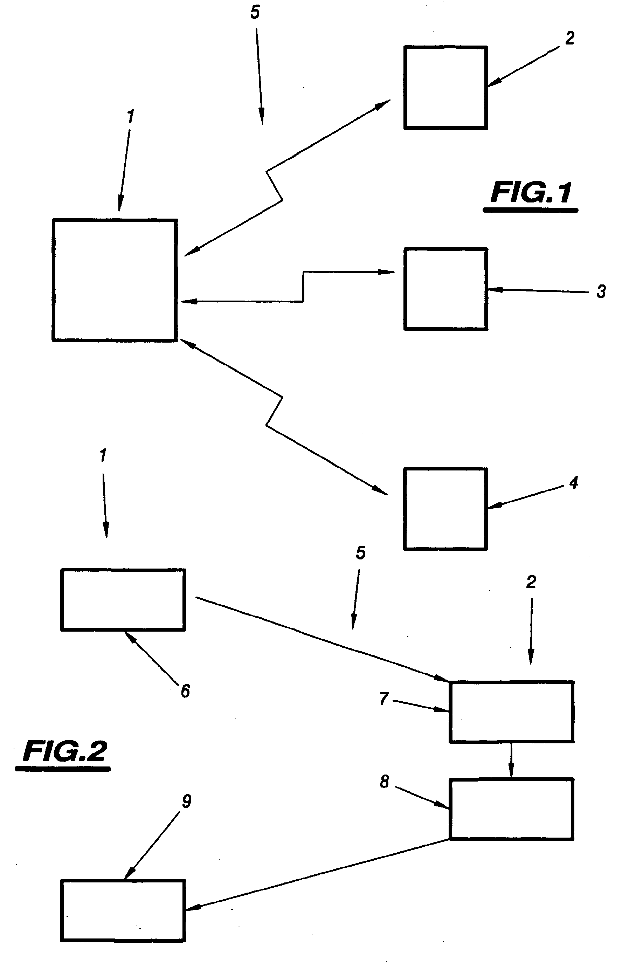

On a en effet représenté sur la figure 1, un système d'échange d'informations entre une station maître désignée par la référence générale 1 et différentes stations esclaves désignées par exemple par les références générales 2,3 et 4 sur cette figure, raccordées par un réseau de transmission d'informations par voie radioélectrique désigné par la référence générale 5.

Ce réseau de transmission d'informations est constitué par exemple par un réseau téléphonique.

Ce réseau permet alors à la station maître de communiquer et d'échanger des informations avec les différentes stations esclaves.

Selon l'invention, cette station maître est également adaptée pour émettre périodiquement et successivement vers chaque station esclave, une requête de contrôle d'état comme cela est illustré sur la figure 2.

C'est ainsi par exemple que la station maître désignée par la référence générale 1 sur cette figure comporte des moyens d'émission 6 de cette requête de contrôle, à travers le réseau de transmission d'informations 5, à destination de moyens de réception 7 de celle-ci implantés par exemple dans la station esclave 2.

En réponse à cette requête de contrôle, la station esclave 2 est adaptée pour émettre un accusé de réception grâce à des moyens d'émission correspondants 8 à destination de moyens de réception correspondants 9 de la station maître.

La réception de cet accusé de réception permet alors à cette station maître de contrôler non seulement l'état de la liaison entre cette station maître et la station esclave, en maintenant celle-ci ouverte, mais également l'état de cette station esclave en contrôlant son bon fonctionnement.

## Revendications

1. Système d'échange d'informations entre une station maître et différentes stations esclaves raccordées par un réseau de transmission d'informations par voie radioélectrique, caractérisé en ce que la station maître (1) émet périodiquement et successivement vers chaque station esclave (2,3,4), une requête de contrôle d'état et en ce que la station esclave (2,3,4) émet un signal d'accusé de réception en réponse à cette requête de contrôle, pour permettre à la station maître (1) de contrôler l'état de la liaison entre la station maître et la station esclave et de cette station esclave.

2. Système selon la revendication 1,caractérisé en ce que le réseau de transmission d'informations (5) est un réseau téléphonique.
